# FASCICULE DE BREVET EUROPEEN

(11) **EP 1 483 996 B1**
(45) Date de publication et mention de la délivrance du brevet: **31.10.2007**
(21) Numéro de dépôt: 04356072.1
(22) Date de dépôt: 12.05.2004
(51) Int. Cl.: A47J 43/07, B29C 45/14

(54) **Accesoire de travail rotatif pour appareil electromenager de preparation culinaire**
Drehwerkzeug fur elektrisches Haushaltsgerät zur Nahrungszubereitung
Rotary working tool for electrical household food processor

(30) Priorité: 06.06.2003 FR 0306864
(43) Date de publication de la demande: 08.12.2004
(73) Titulaire: SEB S.A., 69130 Ecully (FR)
(72) Inventeur: Smit, Robert, 65290 Louey (FR); Charles, Patrick, 65290 Louey (FR); Noguez, Jean Michel, 65100 Lourdes (FR)
(74) Mandataire: Kiehl, Hubert

(56) Documents cités:
- WO-A-03/009994
- FR-A- 2 360 285
- FR-A- 2 768 608
- FR-A- 2 825 257
- US-A1- 2001 008 258

## Description

La présente invention se rapporte au domaine technique général des appareils électroménagers de préparation culinaire comportant un accessoire de travail rotatif tournant dans un récipient de travail.

La présente invention concerne notamment les mini-hachoirs comportant un boîtier moteur disposé sur le récipient de travail. La présente invention concerne également les récipients de travail comportant un accessoire de travail rotatif entraîné par un appareil de type pied mixer. La présente invention concerne également les robots ménagers comportant un récipient de travail présentant un dispositif d'entraînement dans le fond du récipient de travail et un couvercle fermant le récipient de travail.

La présente invention se rapporte plus particulièrement aux accessoires de travail rotatifs.

Les accessoires de travail rotatifs précités comportent un moyeu entraîné par son extrémité supérieure. L'extrémité inférieure du moyeu est prévue pour le guidage en rotation de l'accessoire de travail rotatif dans le récipient de travail. La plupart des accessoires de travail rotatifs comportent un outil de travail fixé au moyeu. Cet outil de travail peut comporter une ou plusieurs parties métalliques telles que notamment des lames coupantes.

Il est connu du document FR 2 360 285 un accessoire de travail rotatif comportant deux lames montées superposées dans un moyeu. Le moyeu comprend une partie supérieure munie d'une broche axiale prévue pour être entraînée par l'arbre du moteur, une partie médiane agencée entre les deux lames, une partie inférieure, un palier axial prévu pour tourner sur un axe monté sur le fond du récipient de travail, et deux rivets traversant les lames, prévus pour assembler la partie supérieure avec la partie inférieure. La réalisation d'un tel accessoire demande un nombre important d'opérations d'assemblage.

Il est connu du document FR 2 743 710 un accessoire de travail rotatif comportant une lame inclinée montée entre une partie supérieure et une partie inférieure d'un moyeu. La partie supérieure comporte un palier axial prévu pour tourner sur un axe issu d'une embase solidaire du moyeu. L'assemblage du moyeu s'avère relativement délicat du fait de la présence de la lame. Le moyeu est partiellement creux pour pouvoir loger des masses d'équilibrage et pour permettre un diamètre plus important du moyeu au niveau de la lame. Cette disposition complique les opérations d'assemblage.

Un accessoire de travail rotatif pour appareil électroménager de préparation culinaire selon le préambule de la revendication 1 est connu du document FR 2 786 608.

Le but de la présente invention est de simplifier la construction d'un accessoire de travail rotatif pour appareil électroménager de préparation culinaire.

Un autre but de la présente invention est de faciliter le nettoyage d'un tel accessoire.

Un autre but de la présente invention est d'améliorer la qualité des préparations réalisées avec un tel accessoire.

Ces buts sont atteints avec un accessoire de travail rotatif pour appareil électroménager de préparation culinaire, comportant un moyeu portant un outil de travail, le moyeu présentant une cavité axiale à une extrémité et un organe d'entraînement à l'autre extrémité, le moyeu comportant un insert et une enveloppe, la cavité axiale étant ménagée dans l'insert, l'enveloppe étant surmoulée sur l'insert, du fait que l'insert présente une paroi extérieure dans laquelle sont formées des cavités latérales. Cette disposition permet d'offrir une plus grande liberté de conception de la forme extérieure de l'accessoire de travail rotatif. La construction de l'accessoire de travail rotatif est ainsi simplifiée. De plus, une meilleure qualité de préparation peut être obtenue plus facilement. Cette disposition permet également de faciliter le nettoyage de l'accessoire de travail rotatif. Cette disposition permet de garantir une épaisseur minimale pour l'enveloppe, ce qui permet de faciliter la liaison entre l'insert et l'enveloppe, et d'obtenir un meilleur état de surface pour l'enveloppe.

Selon une réalisation avantageuse, l'outil de travail est monté sur l'insert, l'enveloppe étant surmoulée sur l'insert portant l'outil de travail. Cette disposition permet de prépositionner l'outil de travail dans le moule lors du surmoulage, et facilite les manipulations.

Avantageusement alors, l'outil de travail peut être métallique, notamment pour réaliser un outil de travail pour couper et/ou pour broyer. A titre de variante, l'outil de travail pourrait par exemple être constitué par des fils souples mis en place sur l'insert avant le surmoulage de l'enveloppe.

Selon une réalisation avantageuse, l'outil de travail comporte au moins une lame coupante. A titre de variante, l'outil de travail peut notamment comporter une tige métallique destinée à pétrir la pâte.

Avantageusement l'outil de travail monté sur l'insert repose sur un support ménagé sur la périphérie de l'insert. A titre de variante, le support pourrait être réalisé dans le moule.

Avantageusement alors le support est formé par au moins une portion de collerette périphérique ménagée sur l'insert. A titre de variante, le support peut notamment être formé par une série de plots ménagés sur la périphérie de l'insert.

Avantageusement l'insert comporte au moins un organe de blocage prévu pour maintenir l'outil de travail. Cette disposition permet de faciliter la manipulation de l'insert et de l'outil de travail avant leur mise en place dans le moule de surmoulage.

Avantageusement alors les organes de blocage comprennent une patte élastique et une butée. D'autres formes de réalisation peuvent être envisagées, notamment plusieurs pattes élastiques réparties sur la périphérie de l'insert.

Avantageusement alors la cavité axiale est agencée entre la patte élastique et la butée. En d'autres termes, la patte élastique et la butée sont disposées de part et d'autre de l'axe de rotation de l'insert. Cette disposition permet d'assurer un bon maintien de l'outil de travail.

Avantageusement encore l'épaisseur de l'enveloppe est comprise entre 2 et 3 mm. Cette disposition permet d'obtenir un aspect de surface particulièrement satisfaisant, ce qui facilite le nettoyage.

Avantageusement encore la plus faible largeur des cavités latérales est comprise entre 2 et 3 mm. Cette disposition permet un bon accrochage de l'enveloppe dans l'insert.

Avantageusement l'outil de travail comporte une partie annulaire prévue pour être montée sur l'insert. Cette disposition facilite la réalisation de l'outil de travail. Cette disposition facilite également sa mise en place sur l'insert.

Selon une autre réalisation avantageuse, l'outil de travail est issu de l'enveloppe. Cette disposition peut être réalisée en substitution ou en complément de la réalisation dans laquelle l'outil de travail est monté sur l'insert. Cette disposition est notamment adaptée pour réaliser des ailettes de malaxage.

L'invention sera mieux comprise à l'étude d'un exemple de réalisation et d'une variante, pris à titre nullement limitatif, illustrés dans les figures annexées, dans lesquelles :
- la figure 1 est une vue d'un appareil électroménager de préparation culinaire comportant un accessoire de travail rotatif selon l'invention,
- la figure 2 est une vue en coupe selon une autre orientation de l'accessoire de travail rotatif et du récipient de travail montré à la figure 1,
- la figure 3 est une vue de l'insert de l'accessoire de travail rotatif montré aux figures 1 et 2,
- la figure 4 est une vue selon une autre orientation de l'insert montré à la figure 3, sur lequel est monté une lame de coupe,
- la figure 5 est une vue selon une autre orientation de l'insert et de la lame de coupe montrés à la figure 4,
- la figure 6 est une vue de l'accessoire de travail rotatif montré aux figures 1 et 2, après surmoulage d'une enveloppe sur l'insert et la lame de coupe montrés aux figures 4 et 5,
- la figure 7 est une vue en perspective et en coupe partielle d'une variante de l'accessoire de travail rotatif illustré aux figures 1 à 6.

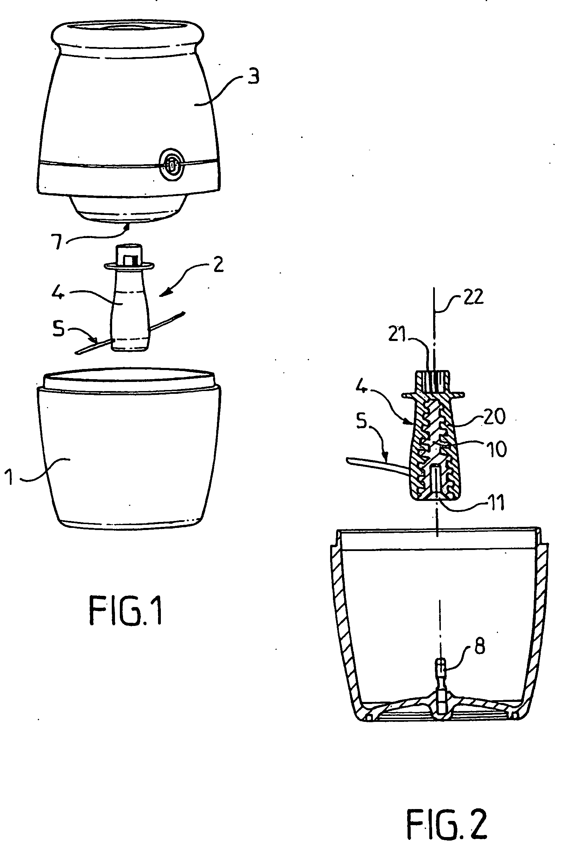

Un appareil électroménager de préparation culinaire comportant un accessoire de travail rotatif 2 selon la présente invention est illustré à la figure 1. L'accessoire de travail rotatif 2 tourne dans un récipient de travail 1 et est entraîné par un dispositif d'entraînement 7 agencé dans un boîtier moteur 3, non décrits en détail.

L'accessoire de travail rotatif 2 comporte un outil de travail 5 monté dans un moyeu 4. L'outil de travail 5 est métallique et forme deux lames coupantes 5a, 5b.

Tel que visible à la figure 2, le moyeu 4 présente une cavité axiale 11 en l'une de ses extrémités et un organe d'entraînement 21 en l'autre extrémité. La cavité axiale 11 et l'organe d'entraînement 21 définissent un axe de rotation 22.

La cavité axiale 11 est ménagée à l'extrémité inférieure du moyeu 4. La cavité axiale 11 est prévue pour tourner sur un élément de guidage 8 issu du fond du récipient de travail 1. L'élément de guidage 8 est un axe métallique.

L'organe d'entraînement 21 est ménagé à l'extrémité supérieure du moyeu 4. L'organe d'entraînement 21 est prévu pour coopérer avec le dispositif d'entraînement 7 du boîtier moteur 3.

Le moyeu 4 comporte un insert 10 et une enveloppe 20. La cavité axiale 11 est ménagée dans l'insert 10. L'enveloppe 20 est surmoulée sur l'insert 10 portant l'outil de travail 5. L'organe d'entraînement 21 est ménagé sur l'enveloppe 20.

L'enveloppe 20 est réalisée dans une matière compatible avec une opération d'injection rapide, telle que par exemple un polypropylène chargé de fibres de verre.

L'insert 10 est réalisé dans une matière présentant un faible coefficient de friction et une bonne résistance à l'usure, notamment dans une matière permettant le frottement sur un axe métallique jusqu'à des vitesses de 4000 à 8000 t/min. De préférence, cette matière peut être injectée ou moulée. L'insert 10 est par exemple réalisé en polyamide renforcé de billes de verre.

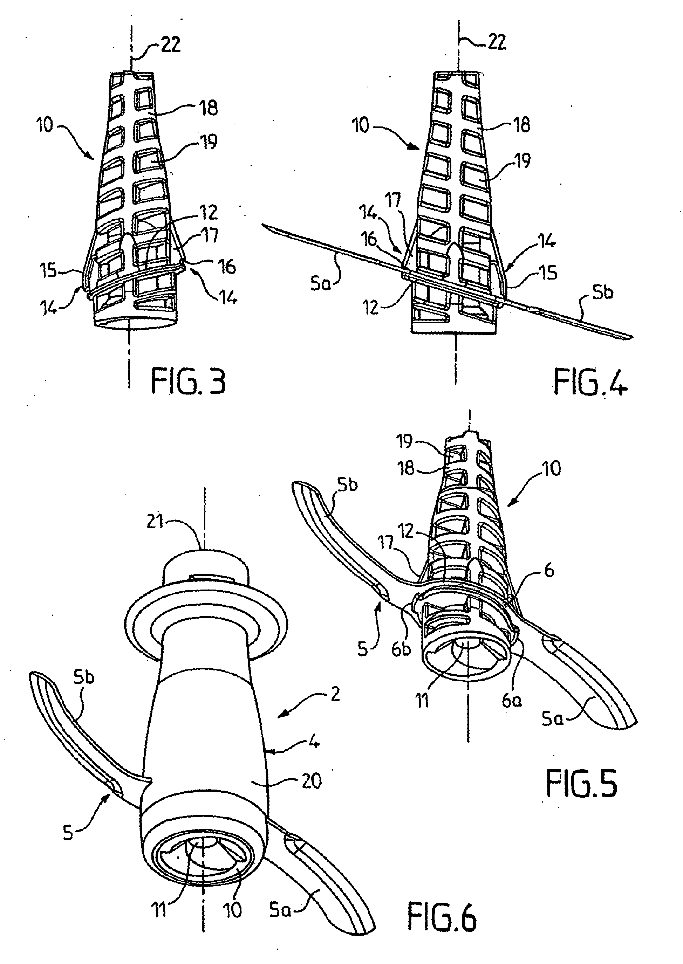

Tel que mieux visible à la figure 3, un support 12 est ménagé sur la périphérie de l'insert 10. Le support 12 est formé par une collerette périphérique. Le support 12 est incliné par rapport à l'axe de rotation 22. L'insert 10 comporte des organes de blocage 14 prévus pour maintenir l'outil de travail 5. Les organes de blocage 14 comprennent une patte élastique 15 et une butée 16 ménagée sous une nervure 17. La patte élastique 15, la nervure 17 et la butée 16 sont agencées au dessus du support 12. Plus particulièrement, la collerette périphérique formant le support 12 est interrompue sous la butée 16. La patte élastique 15 et la butée 16 sont agencées de part et d'autre de l'axe de rotation 22. La cavité axiale 11 est agencée entre la patte élastique 15 et la butée 16. La patte élastique 15 et la nervure 16 sont parallèles à l'axe de rotation 22.

L'insert 10 présente une paroi extérieure 18 dans laquelle sont formées des cavités latérales 19. Les cavités latérales 19 sont présentes au dessus et en dessous du support 12. La plus faible largeur des cavités latérales 19 est de préférence comprise entre 2 mm et 3 mm. L'épaisseur de l'enveloppe 20 est comprise entre 2 et 3 mm au niveau de la paroi extérieure 18 en dehors des cavités latérales 19.

Tel qu'illustré aux figures 4 et 5, l'outil de travail 5 est monté sur l'insert 10. L'outil de travail 5 comporte une partie annulaire 6, mieux visible à la figure 5, prévue pour être montée autour de l'insert 10. Les deux lames 5a, 5b s'étendent de part et d'autre de la partie annulaire 6. La partie annulaire 6 présente deux encoches, 6a, 6b, prévues pour être engagées respectivement sur la patte élastique 15 et sur la nervure 17.

La réalisation de l'accessoire de travail rotatif 2 s'effectue de la manière suivante. L'outil de travail 5 est mis en place sur l'insert 10. La partie annulaire 6 de l'outil de travail 5 repose sur le support 12 de l'insert 10. La patte élastique 15 déformée lors de la mise en place de l'outil de travail 5 permet ensuite de bloquer l'outil de travail 5 retenu également par la butée 16. L'insert 10 avec l'outil de travail 5 est mis en place dans un moule d'injection pour réaliser l'enveloppe 20 autour de l'insert 10. La profondeur des cavités latérales 19 permet l'ancrage de l'enveloppe 20 dans l'insert 10.

L'accessoire de travail rotatif 2 obtenu est illustré à la figure 6.

Le support 12 incliné permet de n'utiliser qu'une seule lame pour réaliser l'outil de travail 5.

A titre de variante, l'outil de travail 5 ne comporte pas nécessairement deux lames coupantes 5a, 5b inclinées issues d'une même pièce métallique. L'outil de travail peut notamment comprendre une tige métallique pour le pétrissage, ou encore des fils souples pour réaliser des émulsions.

A titre de variante, l'outil de travail 5 n'est pas nécessairement réalisé en une seule pièce. L'outil de travail peut par exemple comprendre deux lames coupantes superposées comportant chacune une partie annulaire montée sur l'insert.

A titre de variante, le dispositif d'entraînement 7 n'appartient pas nécessairement à un boîtier moteur, mais peut par exemple appartenir à un couvercle obturant le récipient de travail et être entraîné par un boîtier moteur indépendant dudit couvercle.

A titre de variante, le support 12 peut être formé par une ou plusieurs portions de collerette périphérique. Un ou plusieurs organes de blocage 14 peuvent être prévus. Le ou les organes de blocage 14 ne sont pas nécessairement agencés entre le support 12 et l'extrémité supérieure de l'insert 10, mais peuvent notamment être agencés entre le support 12 et l'extrémité inférieure de l'insert 10.

A titre de variante l'élément de guidage 8 n'est pas nécessairement issu du fond du récipient de travail 1, mais peut par exemple appartenir à une embase mobile en rotation par rapport au moyeu, comme décrit par exemple dans le document FR 2 743 710 ou le document FR 2 768 608. L'élément de guidage n'est pas nécessairement formé par un axe métallique, mais peut par exemple être formé par le fond du récipient de travail 1 ou par l'embase précitée.

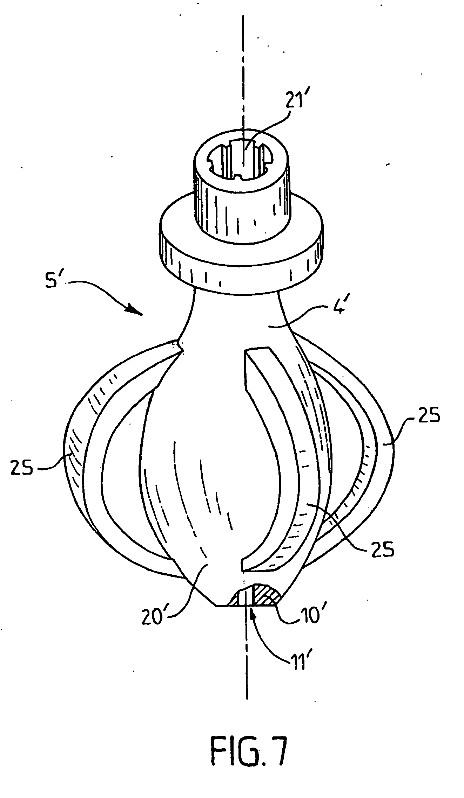

La figure 7 illustre une variante de réalisation différant de l'exemple de réalisation précédent en ce que l'outil de travail 5' est issu de l'enveloppe 20' du moyeu 4'. Plus particulièrement, l'outil de travail 5' comporte plusieurs bras rattachés à leurs extrémité inférieure et supérieure au moyeu 4'. La cavité 11' est ménagée dans l'extrémité inférieure de l'insert 10' recouvert par l'enveloppe 20'. L'organe d'entraînement 21' est ménagé dans l'extrémité supérieure de l'enveloppe 20'.

A titre de variante complémentaire, l'organe d'entraînement 21, 21' n'est pas nécessairement ménagé sur l'extrémité supérieure du moyeu 4, 4' et la cavité axiale 11, 11' n'est pas nécessairement ménagée sur l'extrémité inférieure du moyeu 4, 4'. Une cavité axiale ménagée sur l'extrémité supérieure du moyeu peut coopérer avec un axe monté dans un couvercle fermant un récipient de travail, un dispositif d'entraînement agencé dans le fond du récipient de travail coopérant avec un organe d'entraînement ménagé sur l'extrémité inférieure du moyeu.

A titre de variante complémentaire, l'organe d'entraînement 21, 21' peut être issu du moyeu 4, 4'.

La présente invention n'est nullement limitée à l'exemple de réalisation décrit et à ses variantes, mais englobe de nombreuses modifications dans le cadre des revendications.

## Revendications

1. Accessoire de travail rotatif pour appareil électroménager de préparation culinaire, comportant un moyeu (4 ; 4') portant un outil de travail (5 ; 5'), le moyeu (4 ; 4') présentant une cavité axiale (11 ; 11') à une extrémité et un organe d'entraînement (21 ; 21') à l'autre extrémité, le moyeu (4 ; 4') comportant un insert (10 ; 10') et une enveloppe (20 ; 20'), la cavité axiale (11 ; 11') étant ménagée dans l'insert (10 ; 10'), l'enveloppe (20 ; 20') étant surmoulée sur l'insert (10 ; 10'), **caractérisé en ce que** l'insert (10) présente une paroi extérieure (18) dans laquelle sont formées des cavités latérales (19).

2. Accessoire de travail rotatif selon la revendication 1, **caractérisé en ce que** l'outil de travail (5) est monté sur l'insert (10), l'enveloppe (20) étant surmoulée sur l'insert (10) portant l'outil de travail (5).

3. Accessoire de travail rotatif selon la revendication 2, **caractérisé en ce que** l'outil de travail (5) est métallique.

4. Accessoire de travail rotatif selon l'une des revendications 2 ou 3, **caractérisé en ce que** l'outil de travail (5) comporte au moins une lame coupante (5a, 5b).

5. Accessoire de travail rotatif selon l'une des revendications 2 à 4, **caractérisé en ce que** l'outil de travail (5) monté sur l'insert (10) repose sur un support (12) ménagé sur la périphérie de l'insert (10).

6. Accessoire de travail rotatif selon la revendication 5, **caractérisé en ce que** le support (12) est formé par au moins une portion de collerette périphérique ménagée sur l'insert (10).

7. Accessoire de travail rotatif selon l'une des revendications 2 à 6, **caractérisé en ce que** l'insert (10) comporte au moins un organe de blocage (14) prévu pour maintenir l'outil de travail (5).

8. Accessoire de travail rotatif selon la revendication 7, **caractérisé en ce que** les organes de blocage (14) comprennent une patte élastique (15) et une butée (16).

9. Accessoire de travail rotatif selon la revendication 8, **caractérisé en ce que** la cavité axiale (11) est agencée entre la patte élastique (15) et la butée (16).

10. Accessoire de travail rotatif selon l'une des revendications 1 à 9, **caractérisé en ce que** l'épaisseur de l'enveloppe (20) est comprise entre 2 et 3 mm.

11. Accessoire de travail rotatif selon l'une des revendications 1 à 10, **caractérisé en ce que** la plus faible largeur des cavités latérales (19) est comprise entre 2 et 3 mm.

12. Accessoire de travail rotatif selon l'une des revendications 2 à 11, **caractérisé en ce que** l'outil de travail (5) comporte une partie annulaire (6) prévue pour être montée sur l'insert (10).

13. Accessoire de travail rotatif selon l'une des revendications 1 à 12, **caractérisé en ce que** l'outil de travail (5') est issu de l'enveloppe (20').

## Claims

1. A rotary working accessory for a food-processor household electrical appliance, the accessory comprising a hub (4; 4') carrying a working tool (5; 5'), the hub (4; 4') presenting a central cavity (11; 11') at one end and a drive member (21; 21') at its other end, the hub (4; 4') comprising an insert (10; 10') and a casing (20; 20'), the axial cavity (11; 11') being formed inside the insert (10; 10'), the casing (20; 20') being overmolded on the insert (10; 10'), the accessory being **characterized in that** the insert (10) presents an outer wall (18) having lateral cavities (19) formed therein.

2. A rotary working accessory according to claim 1, **characterized in that** the working tool (5) is mounted on the insert (10), the casing (20) being overmolded on the insert (10) carrying the working tool (5).

3. A rotary working accessory according to claim 2, **characterized in that** the working tool (5) is made of metal.

4. A rotary working accessory according to claim 2 or claim 3, **characterized in that** the working tool (5) comprises at least one sharp blade (5a, 5b).

5. A rotary working accessory according to any one of claims 2 to 4, **characterized in that** the working tool (5) mounted on the insert (10) rests on a support (12) provided at the periphery of the insert (10).

6. A rotary working accessory according to claim 5, **characterized in that** the support (12) is formed by at least one peripheral collar portion formed on the insert (10).

7. A rotary working accessory according to any one of claims 2 to 6, **characterized in that** the insert (10) comprises at least one locking member (14) provided to hold the working tool (5).

8. A rotary working accessory according to claim 7, **characterized in that** the locking members (14) comprise a resilient tab (15) and an abutment (16).

9. A rotary working accessory according to claim 8, **characterized in that** the axial cavity (11) is arranged between the resilient tab (15) and the abutment (16).

10. A rotary working accessory according to any one of claims 1 to 9, **characterized in that** the thickness of the casing (20) lies in the range 2 mm to 3 mm.

11. A rotary working accessory according to any one of claims 1 to 10, **characterized in that** the smallest width of the lateral cavities (19) lies in the range 2 mm to 3 mm.

12. A rotary working accessory according to any one of clams 2 to 11, **characterized in that** the working tool (5) includes an annular portion (6) for mounting on the insert (10).

13. A rotary working accessory according to any one of claims 1 to 12, **characterized in that** the working tool (5') stems from the casing (20').

## Patentansprüche

1. Drehbares Arbeitszubehör für ein Elektrohaushaltsgerät zur Nahrungszubereitung, mit einer Nabe (4; 4'), die ein Arbeitswerkzeug (5; 5') trägt, wobei die Nabe (4; 4') an einem Ende einen axialen Hohlraum (11; 11') und an einem anderen Ende ein Antriebsorgan (21, 21') aufweist, wobei die Nabe (4; 4') einen Einsatz (10; 10') und eine Ummantelung (20; 20') aufweist, wobei der axiale Hohlraum (11; 11') im Einsatz (10; 10') ausgebildet ist, wobei die Ummantelung (20; 20') auf den Einsatz aufgespritzt ist, **dadurch gekennzeichnet, dass** der Einsatz (10) eine Außenwand (18) aufweist, in welcher seitliche Hohlräume (19) gebildet sind.

2. Drehbares Arbeitszubehör nach Anspruch 1, **dadurch gekennzeichnet, dass** das Arbeitswerkzeug (5) auf dem Einsatz (10) angebracht ist, wobei die Ummantelung (20) auf den das Arbeitswerkzeug (5) tragenden Einsatz (10) aufgespritzt ist.

3. Drehbares Arbeitszubehör nach Anspruch 2, **dadurch gekennzeichnet, dass** das Arbeitswerkzeug (5) aus Metall besteht.

4. Drehbares Arbeitszubehör nach einem der Ansprüche 2 oder 3, **dadurch gekennzeichnet, dass** das Arbeitswerkzeug (5) mindestens ein Schneidblatt (5a, 5b) aufweist.

5. Drehbares Arbeitszubehör nach einem der Ansprüche 2 bis 4, **dadurch gekennzeichnet, dass** das auf dem Einsatz (10) angebrachtes Arbeitswerkzeug (5) auf einem Träger (12) aufliegt, der am Umfang des Einsatzes (10) angeordnet ist.

6. Drehbares Arbeitszubehör nach Anspruch 5, **dadurch gekennzeichnet, dass** der Träger (12) durch mindestens einen Abschnitt eines auf dem Einsatz (10) angeordneten Bunds gebildet ist.

7. Drehbares Arbeitszubehör nach einem der Ansprüche 2 bis 6, **dadurch gekennzeichnet, dass** der Einsatz (10) mindestens ein Sperrorgan (14) aufweist, das zum Halten des Arbeitswerkzeugs (5) vorgesehen ist.

8. Drehbares Arbeitszubehör nach Anspruch 7, **dadurch gekennzeichnet, dass** die Sperrorgane (14) eine elastische Lasche (15) und einen Anschlag (16) aufweisen.

9. Drehbares Arbeitszubehör nach Anspruch 8, **dadurch gekennzeichnet, dass** der axiale Hohlraum (11) zwischen der elastischen Lasche (15) und dem Anschlag (16) angeordnet ist.

10. Drehbares Arbeitszubehör nach einem der Ansprüche 1 bis 9, **dadurch gekennzeichnet, dass** die Dicke der Ummantelung (20) zwischen 2 und 3 mm beträgt.

11. Drehbares Arbeitszubehör nach einem der Ansprüche 1 bis 10, **dadurch gekennzeichnet, dass** die geringste Breite der seitlichen Hohlräume (19) zwischen 2 und 3 mm beträgt.

12. Drehbares Arbeitszubehör nach einem der Ansprüche 2 bis 11, **dadurch gekennzeichnet, dass** das Arbeitswerkzeug (5) einen ringförmigen Teil (6) aufweist, das zur Anbringung auf dem Einsatz (10) vorgesehen ist.

13. Drehbares Arbeitszubehör nach Anspruch 1 bis 12, **dadurch gekennzeichnet, dass** das Arbeitswerkzeug (5') aus der Ummantelung (20') hervorgeht.
